# EUROPÄISCHE PATENTSCHRIFT

(11) **EP 0 407 852 B1**
(45) Veröffentlichungstag und Bekanntmachung des Hinweises auf die Patenterteilung: **19.05.1993**
(21) Anmeldenummer: 90112623.5
(22) Anmeldetag: 03.07.1990
(51) Int. Cl.: E01F 8/00, E04C 2/54, E06B 5/20

(54) **Als Lärmschutzelemente geeignete Platten aus Acrylglas**
Acrylic glass sheets suited for noise screen elements
Plaques de verre acrylique convenant comme éléments d'écran antibruit

(30) Priorität: 13.07.1989 DE 3923036
(43) Veröffentlichungstag der Anmeldung: 16.01.1991
(73) Patentinhaber: Degussa Aktiengesellschaft, 60311 Frankfurt (DE)
(72) Erfinder: Oberländer, Klaus, D-6450 Hanau 9 (DE); Brand, Norbert, Dr., D-6100 Darmstadt (DE); Kirdorf, Kurt, D-8756 Kahl (DE); Seelman, Peter, A-1238 Wien (AT); Wachter, Heinz, A-2435 Ebergassing (AT)

(56) Entgegenhaltungen:
- DE-A- 1 658 890
- DE-A- 2 906 259
- DE-A- 3 022 253
- DE-U- 6 607 880
- LU-A- 40 666
- US-A- 3 525 658
- US-A- 4 214 411

## Beschreibung

Gegenstand der Erfindung sind als Lärmschutzelemente geeignete Platten aus zerbrechlichem Acrylglas, die auch bei niedrigen Temperaturen (-20°C) gegen das Entstehen und Herabfallen von losen Bruchstücken gesichert sind.

Beim Bau von Lärmschutzwänden an öffentlichen Verkehrswegen werden häufig durchsichtige Elemente aus Einscheibensicherheitsglas, Verbundsicherheitsglas, Polycarbonat oder Acrylglas eingebaut. Beim Aufprall eines Fahrzeuges auf ein solches Element muß damit gerechnet werden, daß es zerbricht und daß Bruchstücke auf darunter- oder danebenliegende Verkehrsflächen fallen und Menschen gefährden. Besonders im Winter bei niedrigen Temperaturen wird dieses Risiko noch erhöht, und zwar durch das Verspröden der meisten derartigen Elemente und durch häufigeres Unfallgeschehen.

Abhilfe gegen das Herabfallen von Bruchstücken wird durch Fangnetze geschaffen, die dicht über die Lärmschutzelemente gespannt werden. Derartige Maßnahmen sind bei der Verwendung von spröden oder im Laufe der Zeit versprödenden Materialien durch "Zusätzliche Technische Vorschriften und Richtlinien für die Ausführung von Lärmschutzwänden an Straßen" (ZTV-Lsw 88 unter 3.4.2. und die Richtzeichnung LS3 des Bundesministers für Verkehr) vorgeschrieben. Diese Art der Sicherung hat jedoch eine ganze Reihe von Nachteilen: Die Durchsicht durch die Elemente wird in erheblichem Maße beeinträchtigt. Die Fangnetze müssen in regelmäßigen Abständen nachgespannt werden. In den Netzen verfängt sich Laub und Schmutz. Die Netze müssen zum Reinigen der Lärmschutzelemente abgenommen werden.

Andere Maßnahmen, wie Fangseile an den Ecken, angebracht an Platten aus Polycarbonat oder Acrylglas, auch mit Sollbruchstelle (vgl. DE-GM 84 35 283) oder die Verwendung von Verbundsicherheitsglas, führen bei -20°C nicht zu einer Sicherung gegen das Entstehen und Herabfallen von losen Bruchstücken.

Bei einer Prüfung, die den Aufprall eines Kraftfahrzeuges auf ein Lärmschutzelement simulieren soll, wird eine Stahlkugel von 300 kg aus einer Höhe von 1 m auf eine horizontal eingespannte Platte aufschlagen lassen.

Die oben beschriebenen Elemente und auch solche, bei denen streifenförmige Verstärkungseinlagen (vgl. DE-GM 66 07 880) eingebettet sind, halten bei -20°C dieser Beanspruchung nicht stand.

Die erfindungsgemäßen Platten sind dadurch gekennzeichnet, daß sie, bezogen auf den Plattenquerschnitt, etwa mittig monofile Kunststoff-Fäden oder ein Gittergewebe aus solchen Fäden eingebettet enhalten.

Die eingebetteten Kunststoff-Fäden können so angeordnet sein, daß sie parallel zueinander in nur einer Richtung verlaufen, oder so, daß sie jeweils parallel zueinander in zwei Richtungen verlaufen. Im letzteren Falle können die beiden Richtungen einen Winkel von 90° oder auch einen von 90° abweichenden Winkel bilden.

Als Kunststoff-Fäden sind monofile Fäden aus Polyamid besonders gut geeignet, weil die Haftung zwischen derartigen Fäden und dem sie umgebenden Acrylglas relativ gering und kein nennenswerter Verlust der Reißfestigkeit auch bei -20°C gegeben ist. Beim Bruch des Acrylglases können sich die Fäden dehnen und zerreißen infolgedessen nicht oder allenfalls zu einem geringen Teil und halten die entstehenden Bruchstücke zusammen. Der Durchmesser der monofilen Fäden liegt zweckmäßigerweise zwischen 0,2 und 2,0 mm. Der seitliche Abstand zwischen benachbarten Fäden sollte in dem Bereich zwischen 8 und 100 mm liegen.

In die erfindungsgemäßen Platten können zusätzlich Streifen, Ornamente oder Figuren eingebettet werden, die der Gestaltung der Elemente und/oder dem Schutz von Vögeln dienen.

Die erfindungsgemäßen Platten zeichnen sich durch mehrere vorteilhafte Eigenschaften aus: Die eingebetteten Kunststoff-Fäden sind nahezu unsichtbar, so daß die Durchsicht durch das Element erhalten bleibt. Da die Kunststoff-Fäden im Inneren der Platten eingebettet sind, sind sie optimal gegen Witterungseinflüsse geschützt. Die Reinigung der Platten ist völlig problemlos. Vor allem aber sind sie auch bei niedrigen Temperaturen (-20°C) noch gegen das Enstehen und Herabfallen von losen Bruchstücken gesichert.

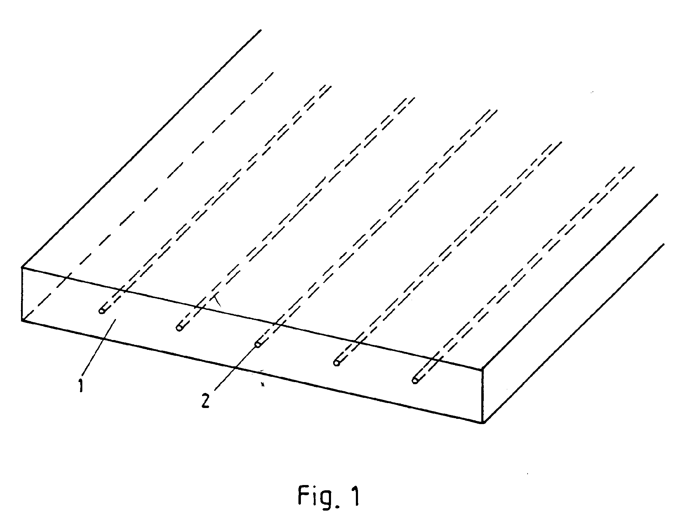

In den Figuren 1 bis 3 der Zeichnung sind verschiedene Ausführungsformen der erfindungsgemäßen Platten schematisch dargestellt.

Figur 1 zeigt eine gegossene Acrylglasplatte (1), in die etwa mittig parallel zueinander verlaufende Kunststoff-Fäden (2) eingebettet sind. Eine solche Platte kann in einer Form aus zwei durch eine umlaufende Dichtung voneinander getrennten Glasplatten hergestellt werden, in der etwa mittig die Kunststoff-Fäden eingespannt sind. In die Kammer wird dann ein Sirup auf der Grundlage von Methylmethacrylat eingefült und im Wasserbad zu einem hochmolekularen Polymerisat ausgehärtet.

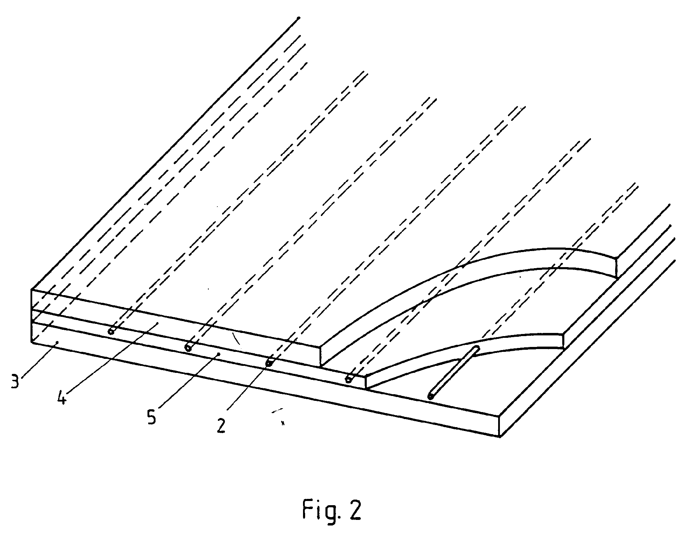

Figur 2 zeigt ein Verbundelement, bestehend aus zwei vorgefertigten Acrylglasplatten (3) und (4), die durch eine Zwischenschicht (5) miteinander verbunden sind. In die Zwischenschicht sind wiederum etwa mittig parallel zueinander verlaufende Kunststoff-Fäden (2) eingebettet. Ein solches Verbundelement kann dadurch hergestellt werden, daß man eine Form aus zwei durch eine umlaufende Dichtung voneinander getrennten vorgefertigten Acrylglasplatten bildet, in der etwa mittig die Kunststoff-Fäden eingespannt sind. In den Zwischenraum wird dann ein kalthärtendes Methacrylatharz eingefüllt und ausgehärtet.

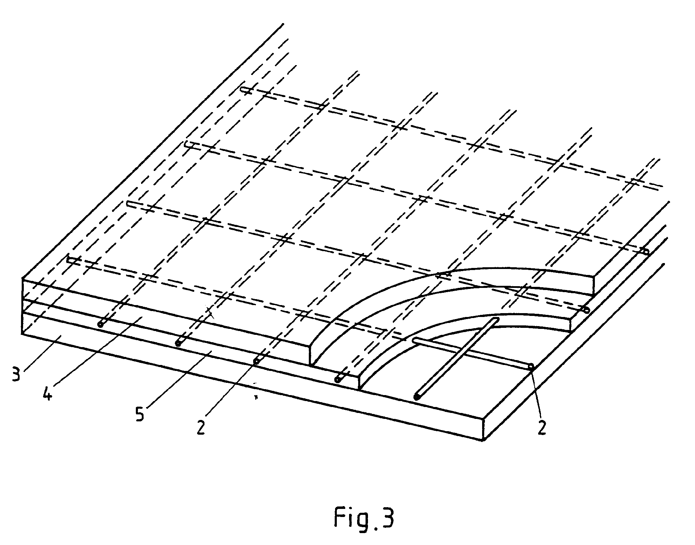

Figur 3 zeigt ein Verbundelement, wiederum bestehend aus zwei vorgefertigten Acrylglasplatten (3) und (4), die durch eine Zwischenschicht (5) miteinander verbunden sind. Der Unterschied zu Figur 2 besteht darin, daß die in die Zwischenschicht etwa mittig eingebetteten Kunststoff-Fäden (2) jeweils parallel zueinander in zwei Richtungen verlaufen, die sich in einem Winkel von 90° kreuzen.

In den nachfolgenden Beispielen wird die Herstellung und Prüfung einiger erfindungsgemäßer Platten näher erläutert:

### Beispiel 1:

Zur Herstellung einer Acrylglasplatte gemäß Figur 1 wurde aus zwei 2 m x 3 m großen Platten aus poliertem Silikatglas mit Hilfe einer 20 mm starken umlaufenden Dichtung eine Kammer gebildet. In diese Kammer wurden etwa mittig im Abstand von jeweils 30 mm parallel zueinander monofile Polyamidfäden mit einem Durchmesser von 0,5 mm eingespannt. Dann wurde in die Kammer ein einen radikalbildenden Initiator enthaltender Methylmethacrylatsirup eingefüllt. Die gefüllte Kammer wurde in ein Waserbad gebracht, und der Sirup wurde durch Wärmezufuhr zu einer Platte aus hochmolekularem Polymethylmethacrylat ausgehärtet. Nach dem Entformen wurde eine etwa 2 m x 3 m große und 20 mm dicke gegossene Acrylglasplatte mit den etwa mittig eingebetteten Polyamidfäden erhalten.

Die Platte wurde in Anlehnung an DIN 52290 zweiseitig frei aufliegend durch eine aus 9 m Höhe herabfallende Stahlkugel mit einer Masse von 4,1 kg zertrümmert. Die entstandenen Bruchstücke wurden jedoch durch die eingebetteten Fäden zusammengehalten.

Eine weitere Prüfung wurde, wie oben beschrieben, mit einer Stahlkugel von 300 kg (Fallhöhe 1 m) bei Raumtemperatur und bei -20°C durchgeführt. Die entstandenen Bruchstücke wurden ebenfalls wieder durch die eingebetteten Fäden zusammengehalten.

### Beispiel 2:

Zur Herstellung eines Verbundelements gemäß Figur 2 wurde aus zwei vorgefertigten gegossenen Acrylglasplatten (2000 mm x 1220 mm x 8 mm) mit Hilfe einer 4 mm starken umlaufenden Dichtung eine Kammer gebildet. In diese Kammer wurden etwa mittig im Abstand von jeweils 30 mm parallel zueinander monofile Polyamidfäden mit einem Durchmesser von 0,9 mm eingespannt. Dann wurde in die Kammer ein niedrigviskoses, einen äußeren Weichmacher auf der Basis eines Zitronensäureesters und ein Redoxintiatorsystem enthaltendes kalthärtendes Methacrylatharz eingefüllt.

Nach vollständiger Aushärtung der Zwischenschicht wurde das erhaltene Verbundelement den Bruchtests gemäß Beispiel 1 unterworfen. Die entstandenen Bruchstücke wurden wieder durch die eingebetteten Fäden zusammengehalten.

### Beispiel 3:

Es wurde verfahren wie im Beispiel 2 mit dem Unterschied, daß anstelle der monofilen Polyamidfäden ein Polyamid-Gittergewebe aus monofilen Fäden mit einem Durchmesser von 1,2 mm und einer Maschenweite von 8 mm x 8 mm in die Zwischenschicht eingebettet wurde.

Bei den Bruchtests gemäß Beispiel 1 wurden die entstandenen Bruchstücke wieder durch das eingebettete Gewebe zusammengehalten.

## Patentansprüche

1. Als Lärmschutzelemente geeignete Platten aus zerbrechlichem Acrylglas,
**dadurch gekennzeichnet,**
daß sie, bezogen auf den Plattenquerschnitt, etwa mittig monofile Kunstoff-Fäden oder ein Gittergewebe aus solchen Fäden eingebettet enthalten, die auch bei niedrigen Temperaturen (-20°C) die Platten gegen das Entstehen und Herabfallen von losen Bruchstücken sichern.

2. Platten nach Anspruch 1,
dadurch gekennzeichnet,
daß die eingebetteten Kunststoff-Fäden parallel zueinander in einer Richtung verlaufen.

3. Platten nach Anspruch 1,
dadurch gekennzeichnet,
daß die eingebetteten Kunststoff-Fäden jeweils parallel zueinander in zwei Richtungen verlaufen.

4. Platten nach Anspruch 3,
dadurch gekennzeichnet,
daß die beiden Richtungen einen Winkel von 90° bilden.

5. Platten nach Anspruch 3,
dadurch gekennzeichnet,
daß die beiden Richtungen einen von 90° abweichenden Winkel bilden.

6. Platten nach einem der Ansprüche 1 bis 5,
dadurch gekennzeichnet,
daß die Kunststoff-Fäden monofile Fäden aus Polyamid mit einem Durchmesser von 0,2 bis 2,0 mm sind.

7. Platten nach einem der Ansprüche 1 bis 6,
dadurch gekennzeichnet,
daß die Kunststoff-Fäden in einem seitlichen Abstand von 8 bis 100 mm verlaufen.

8. Platten nach einem der Ansprüche 1 bis 7,
dadurch gekennzeichnet,
daß sie zusätzliche Streifen oder Ornamente eingebettet enthalten, die der Gestaltung der Elemente und/oder dem Vogelschutz dienen.

## Claims

1. Plates of shatterable acrylic glass which are suitable as sound-proofing elements, characterized in that they have embedded in them approximately centrally, in relation to the plate cross-section, plastics monofilaments or a grid netting of such filaments, which protect the plates from the formation and falling off of loose fragments even at low temperatures (-20°C).

2. Plates according to Claim 1, characterized in that the embedded plastics filaments run parallel to one another in one direction.

3. Plates according to Claim 1, characterized in that the embedded plastics filaments run in each case parallel to one another in two directions.

4. Plates according to Claim 3, characterized in that the two directions form an angle of 90°.

5. Plates according to Claim 3, characterized in that the two directions form an angle deviating from 90°.

6. Plates according to one of Claims 1 to 5, characterized in that the plastics filaments are monofilaments of polyamide having a diameter of 0.2 to 2.0 mm.

7. Plates according to one of Claims 1 to 6, characterized in that the plastics filaments run at a lateral spacing of 8 to 100 mm.

8. Plates according to one of Claims 1 to 7, characterized in that they have embedded in them additional strips or ornamental constituents which serve to form the elements and/or protect birds.

## Revendications

1. Plaques convenant comme écrans anti-bruit en verre acrylique cassable, caractérisées en ce qu'elles contiennent enrobés à peu près au milieu de la section de la plaque des monofils de matière plastique ou un grillage constitué de tels fils, qui, même à basses températures (-20°C), protègent les plaques de la formation et de la chute de morceaux cassés.

2. Plaques selon la revendication 1, caractérisées en ce que les fils de matière plastique enrobés s'étendent parallèlement l'un à l'autre dans une direction.

3. Plaques selon la revendication 1, caractérisées en ce que les fils de matière plastique enrobés s'étendent parallèlement l'un à l'autre dans deux directions.

4. Plaques selon la revendication 3, caractérisées en ce que les deux directions forment un angle de 90°.

5. Plaques selon la revendication 3, caractérisées en ce que les deux directions forment un angle différent de 90°.

6. Plaques selon l'une des revendications 1 à 5, caractérisées en ce que les fils de matière plastique sont des monofils de polyamide avec un diamètre de 0,2 à 2,0 mm.

7. Plaques selon l'une des revendications 1 à 6, caractérisées en ce que les fils de matière plastique s'étendent avec un écartement de 8 à 100mm.

8. Plaques selon l'une des revendications 1 à 7, caractérisées en ce qu'elles contiennent incorporées des bandes ou décorations supplémentaires, qui servent à la configuration des éléments et/ou à les protéger des oiseaux.
